# EUROPÄISCHE PATENTANMELDUNG

(11) **EP 2 354 521 A2**
(43) Veröffentlichungstag der Anmeldung: **10.08.2011**
(21) Anmeldenummer: 11000475.1
(22) Anmeldetag: 21.01.2011
(51) Int. Cl.: F02M 25/07

(54) **Kraftwagen mit einer Abgasanlage**

(30) Priorität: 27.01.2010 DE 102010005803
(71) Anmelder: Audi AG, 85045 Ingolstadt (DE)
(72) Erfinder: Vollmer, Hubert, 05311-000 Sao Paulo (BR); Sailer, Uwe, 74889 Sinsheim (DE)
(74) Vertreter: Lehle, Josef

(57) **Zusammenfassung**

Die Erfindung betrifft einen Kraftwagen mit einer Brennkraftmaschine (14) und einer Abgasanlage (10) mit einer Abgasleitung (12), mittels welcher Abgas von der Brennkraftmaschine (14) abführbar ist, sowie einer Abgasrückführungsleitung (16), mittels welcher Abgas aus der Abgasleitung (12) zu einem Ansaugtrakt (26) der Brennkraftmaschine (14) rückführbar ist. In der Abgasrückführungsleitung (16) ist ein Abgaskühler (20) vorgesehen, der gegenüber der Brennkraftmaschine (14) beweglich ist. Durch die relative Beweglichkeit kann der Abgaskühler (20) zur Brennkraftmaschine (14) beabstandet angeordnet werden, so dass ein direkter Wärmeeintrag von der Brennkraftmaschine (14) in den Abgaskühler (20) vermieden wird. Dies verbessert die Kühlleistung des Abgaskühlers (20) und ermöglicht die Verwendung weniger temperaturbeständigere Materialien. Die Erfindung betrifft weiterhin ein Verfahren zum Betreiben eines solchen Kraftwagens, bei welchem in Abhängigkeit vom Betriebszustand des Kraftwagens ein Teilströmungsquerschnitt des Abgaskühlers (20) freigegeben bzw. verschlossen wird. Dies ermöglicht die Anpassung der Kühlleistung des Abgaskühlers (20) an den Betriebszustand des Kraftwagens.

## Beschreibung

Die Erfindung betrifft einen Kraftwagen mit einer Abgasanlage nach dem Oberbegriff von Patentanspruch 1 sowie ein Verfahren zum Betreiben eines solchen Kraftwagens.

Zur Reduzierung von Stickoxidemissionen weisen moderne Kraftwagen oftmals eine Abgasanlage mit Abgasrückführung auf. Eine Teilmenge des von einer Brennkraftmaschine des Kraftwagens erzeugten Abgases wird in solchen Abgasanlagen der Ansaugluft der Brennkraftmaschine zugeführt. Das Gemisch aus Ansaugluft und Abgas besitzt einen niedrigeren Sauerstoffgehalt als die reine Ansaugluft, wodurch die Verbrennungstemperatur in der Brennkraftmaschine gesenkt wird. Durch die niedrigere Verbrennungstemperatur wird die Oxidation von Stickstoff während der Verbrennung vermindert, so dass weniger umweltschädliche Stickoxide entstehen.

Bei Ottomotoren kann durch die Abgasrückführung zudem eine Senkung des spezifischen Kraftstoffverbrauchs im Teillastbetrieb erreicht werden. Aufgrund des geringeren Sauerstoffgehalts des Gemisches in der Brennkraftmaschine kann im Teillastbetrieb eine Drosselklappe weiter geöffnet bleiben, so dass Staudruckverluste an der Drosselklappe vermieden werden, die den Wirkungsgrad der Brennkraftmaschine senken.

Eine besonders gute Wirkung der Abgasrückführung wird erreicht, wenn das rückgeführte Abgas mittels eines Abgaskühlers gekühlt wird, da sich beim Abkühlen des Abgases dessen Dichte erhöht.

Üblicherweise sind solche Abgaskühler starr mit der Brennkraftmaschine des Kraftwagens verbunden. Eine Abgasanlage mit einem solchen Abgaskühler ist beispielsweise aus der DE 100 28 400 A1 bekannt. Bei derartigen Anordnungen wird sowohl aus dem Abgas als auch direkt von der Brennkraftmaschine Wärme in den Abgaskühler und in benachbarte Komponenten eingetragen. Es besteht daher die Gefahr der Überhitzung. Zur Konstruktion von Abgaskühlern und benachbarten Bauteilen der Abgasanlage müssen daher hoch wärmebeständige Werkstoffe verwendet werden, die schwer und teuer sind.

Der vorliegenden Erfindung liegt somit die Aufgabe zugrunde, einen Kraftwagen nach dem Oberbegriff von Patentanspruch 1 sowie ein Verfahren zu dessen Betrieb bereitzustellen, durch welche die thermische Belastung eines Abgaskühlers und benachbarter Bauteile verringert wird.

Diese Aufgabe wird durch einen Kraftwagen mit den Merkmalen des Patentanspruchs 1 sowie durch ein Verfahren mit den Merkmalen des Patentanspruchs 7 gelöst.

Ein erfindungsgemäßer Kraftwagen zeichnet sich dadurch aus, dass ein Abgaskühler einer Abgasanlage gegenüber der Brennkraftmaschine des Kraftwagens beweglich ist. Der Abgaskühler kann beispielsweise mittels flexibler Befestigungsmittel mit der Brennkraftmaschine verbunden sein. Auch eine Befestigung des Abgaskühlers an anderen, relativ zur Brennkraftmaschine beweglichen Komponenten des Kraftwagens ist möglich. Eine Verbindung zwischen Abgaskühler und Brennkraftmaschine besteht dann nur durch Leitungen für das rückgeführte Abgas, die keine Haltefunktion aufweisen.

Hierdurch ist es möglich, den Abgaskühler zu der Brennkraftmaschine des Kraftwagens beabstandet anzubringen. Damit wird ein direkter Wärmeeintrag von der Brennkraftmaschine in den Abgaskühler und benachbarte Bauteile der Abgasanlage vermieden. Der Abgaskühler und die benachbarten Bauteile können somit für eine geringere thermische Belastung ausgelegt werden. Insbesondere ist die Verwendung von weniger hitzebeständigen Materialien möglich. Die Abgasanlage eines solchen Kraftwagens kann somit besonders kostengünstig hergestellt werden und weist auch ein geringes Gewicht auf.

Durch den verminderten Wärmeeintrag in den Abgaskühler gegenüber dem Stand der Technik wird auch dessen Kühlleistung verbessert. Das rückgeführte Abgas kann somit auf tiefere Temperaturen abgekühlt werden und weist daher eine höhere Dichte auf. Ein erfindungsgemäßer Kraftwagen weist daher besonders niedrige Stickoxidemissionen auf und kann mit geringeren Abgasrückführungsraten betrieben werden.

Bevorzugt ist der Abgaskühler über eine flexible Leitung mit der Brennkraftmaschine verbunden. Eine solche Leitung erlaubt Relativbewegungen zwischen Brennkraftmaschine und Abgaskühler. Der Abgaskühler muss somit nicht gemeinsam mit der Brennkraftmaschine gelagert werden. Dies erlaubt eine besonders flexible Anordnung des Abgaskühlers je nach den Bauraumgegebenheiten im Kraftwagen.

Die flexible Leitung besteht vorzugsweise aus einem nichtmetallischen Material. Zweckmäßigerweise werden hierfür Materialien verwendet, die ein geringeres Eigengewicht aufweisen als metallische Leitungen, wie beispielsweise Kunststoffe. Leitungen aus Kunststoffen sind gleichzeitig besonders beständig gegenüber Schwingungsbelastungen, wie sie im Betrieb des Kraftwagens auftreten.

Bei einer bevorzugten Ausführungsform der Erfindung ist in Strömungsrichtung des Abgases hinter dem Abgaskühler ein Abgasrückführungsventil vorgesehen. Über ein solches Ventil kann die Menge des rückgeführten Abgases in Abhängigkeit von einem Betriebszustand des Kraftwagens bedarfsgerecht eingestellt werden. Es ist hierbei besonders zweckmäßig, das Abgasrückführungsventil motorfest anzuordnen und über die flexible Leitung mit dem Abgaskühler zu verbinden.

Bevorzugt weist der Abgaskühler wenigstens zwei voneinander getrennte Wärmetauscher auf, die einen jeweiligen Strömungskanal bereitstellen. Die jeweiligen Strömungskanäle werden in wenigstens einem Betriebszustand des Kraftwagens parallel von rückgeführtem Abgas durchströmt. Solche Kühler besitzen in diesem Betriebszustand eine besonders gute Kühlleistung.

In einer besonders bevorzugten Ausführungsform ist wenigstens ein Verschlusselement vorgesehen, mittels welchem ein zugeordneter Strömungskanal eines Wärmetauschers verschließbar ist. Dies ermöglicht eine Einstellung der vom Abgas durchströmten Kühlernetzfläche und damit eine Einstellung der Kühlleistung des Abgaskühler insgesamt. Die Temperatur des rückgeführten Abgases kann somit in Abhängigkeit vom Betriebszustand des Kraftwagens eingestellt werden.

Beispielsweise ist es möglich, im Teillastbetrieb des Kraftwagens wenigstens einen der Wärmetauscher zu verschließen, um so die Abgastemperatur weniger stark abzusenken. Hierdurch kann vermieden werden, dass Wasser aus dem Abgas kondensiert und dem Kühler nachgelagerte Komponenten des Kraftwagens beschädigt. Im Volllastbetrieb des Kraftwagens wird dann der Wärmetauscher geöffnet, da in diesem Betriebszustand das Abgas mit einer höheren Temperatur aus der Brennkraftmaschine austritt. Durch die höhere Kühlleistung des Abgaskühlers bei geöffnetem Verschlusselement wird die Temperatur des rückgeführten Abgases stärker abgesenkt, so dass die thermische Belastung von anderen Komponenten der Abgasanlage, beispielsweise einer Schlauchverbindung zwischen Abgaskühler und Abgasrückführungsventil, vermindert wird.

Die Erfindung betrifft ferner ein Verfahren zum Betreiben eines Kraftwagens bei welchem ein Abgasteilstrom aus einer Abgasleitung einer Abgasanlage entnommen wird, mittels eines Abgaskühlers gekühlt wird und über eine flexible Leitung in einen Ansaugtrakt einer Brennkraftmaschine zurückgeführt wird. In Abhängigkeit vom Betriebszustand des Kraftwagens wird hierbei wenigstens ein Teilströmungsquerschnitt des Abgaskühlers verschlossen oder freigegeben.

Durch das Verschließen oder Freigeben des wenigstens einen Teilströmungsquerschnitts des Abgaskühlers kann dessen Kühlleistung variiert werden. Damit kann die Temperatur des rückgeführten Abgases vorteilhaft an den jeweiligen Betriebszustand des Kraftwagens angepasst werden.

Bevorzugt wird der wenigstens eine Teilströmungsquerschnitt des Abgaskühlers bei Unterschreiten eines vorgegebenen Abgasmassenstroms durch den Abgaskühler verschlossen und bei Überschreiten eines vorgegebenen Abgasmassenstroms freigegeben. Bei geringen Abgasmassenströmen wird eine geringere Kühlleistung des Abgaskühlers benötigt, durch das Verschließen des wenigstens einen Teilströmungsquerschnitts wird vermieden, dass das Abgas zu stark abgekühlt wird, was zu Kondensation von Wasser im Abgaskühler führen könnte. Bei hohen Abgasmassenströmen wird durch das Verfahren eine höhere Kühlleistung des Abgaskühlers bereitgestellt, wodurch eine zu hohe thermische Belastung von Komponenten der Abgasanlage, insbesondere der flexiblen Leitung verhindert wird.

Die Einstellung des Strömungsquerschnitts des Abgaskühlers kann auch je nach der gemessenen Abgastemperatur erfolgen. Bei einer niedrigen Abgastemperatur wird der wenigstens eine Teilströmungsquerschnitt verschlossen, um die Kühlleistung zu senken und Kondensatbildung im relativ kühlen Abgas zu vermeiden, bei einer hohen Abgastemperatur wird der wenigstens eine Teilströmungsquerschnitt dagegen freigegeben, um durch eine erhöhte Kühlleistung des Abgaskühlers der thermischen Belastung der Abgasanlage entgegenzuwirken.

Auch die Leistungsabgabe der Brennkraftmaschine kann als Kriterium zur Einstellung der Kühlleistung Anwendung finden. Bei geringer Leistungsabgabe fällt eine geringe Abgasmenge mit relativ geringer Temperatur an. In diesem Betriebszustand des Kraftwagens wird der wenigstens eine Teilströmungsquerschnitt des Abgaskühlers verschlossen, da nur eine geringe Kühlleistung zum ausreichenden Kühlen des rückgeführten Abgases benötigt wird. Bei hoher Leistungsabgabe der Brennkraftmaschine fällt hingegen eine hohe Abgasmenge mit relativ hoher Abgastemperatur an. Der wenigstens eine Teilströmungsquerschnitt des Abgaskühlers wird hier geöffnet, um die Kühlleistung zu erhöhen und eine Beschädigung der Abgasanlage durch die hohe Abgastemperatur zu vermeiden.

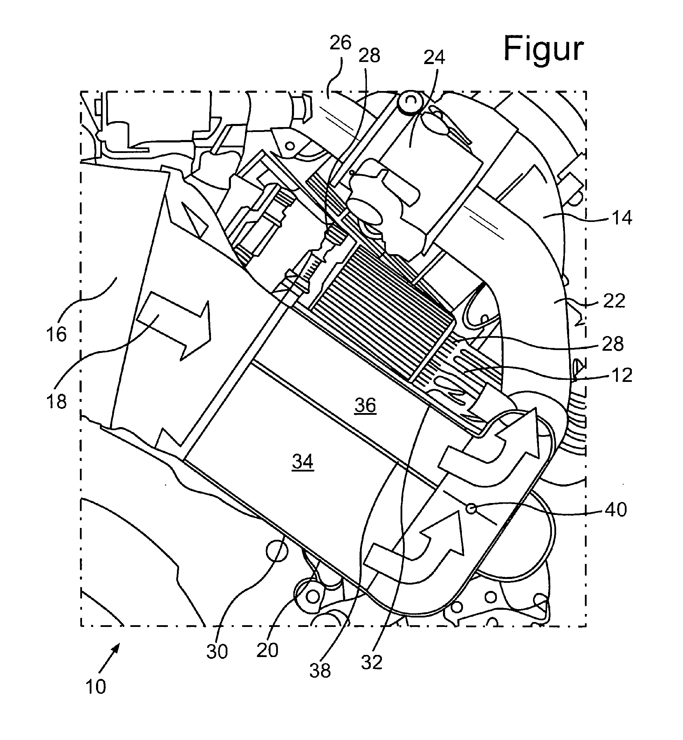

Im Folgenden wird die Erfindung und ihre Ausführungsformen anhand der Zeichnung näher erläutert. Die einzige Figur zeigt hierbei eine perspektivische Ansicht eines Teilbereichs einer Abgasanlage für einen erfindungsgemäßen Kraftwagen.

Eine im Ganzen mit 10 bezeichnete Abgasanlage für einen Kraftwagen umfasst eine Abgasleitung 12, mittels welcher Abgas von einer Brennkraftmaschine 14 abgeführt wird. Eine Anteilsmenge des Abgases wird mittels einer mit der Abgasleitung 12 verbundenen Abgasrückführungsleitung 16 abgezweigt und in Richtung des Pfeiles 18 zu einem Abgaskühler 20 geleitet. Nach Durchströmen des Abgaskühlers 20 gelangt das Abgas über einen flexiblen Schlauch 22 und ein Abgasrückführungsventil 24 zurück in einen Ansaugtrakt 26 der Brennkraftmaschine 14, wo es mit angesaugter Verbrennungsluft vermischt wird. Hierdurch wird der Sauerstoffgehalt des in der Brennkraftmaschine verbrannten Gemisches gesenkt, so dass die Verbrennung bei niedrigeren Temperaturen verläuft als die Verbrennung mit reiner Luft. Dies vermindert die Entstehung von Stickoxiden bei der Verbrennung.

Der Abgaskühler 20 ist über Schellen 28 starr mit der Abgasleitung 12 verbunden. Eine Verbindung zur Brennkraftmaschine besteht dagegen nur über die flexible Schlauchleitung 22. Der Abgaskühler 20 kann sich also relativ zur Brennkraftmaschine 14 bewegen und muss nicht gemeinsam mit dieser gelagert werden.

Da der Abgaskühler 20 zur Brennkraftmaschine 14 beabstandet angeordnet ist, erfolgt kein direkter Wärmeeintrag von der Brennkraftmaschine 14 in den Abgaskühler 20. Lediglich das über die Abgasrückführleitung 16 eingeleitete Abgas erwärmt den Abgaskühler 20. Insgesamt muss durch den Abgaskühler 20 also weniger Wärme abgeführt werden als bei aus dem Stand der Technik bekannten Abgasanlagen, bei welchen der Abgaskühler starr mit der Brennkraftmaschine verbunden ist und in direktem Kontakt mit dieser steht.

Der geringere Wärmeeintrag ermöglicht zudem die Verwendung von Werkstoffen mit relativ geringer Temperaturbeständigkeit. Beispielsweise kann der flexible Schlauch 22 aus einem nichtmetallischen Werkstoff gefertigt sein. Hierfür bieten sich insbesondere Kunststoffe an.

Um die Kühlleistung des Abgaskühlers 20 variieren zu können, weist dieser zwei getrennte Wärmetauscher 30, 32 auf, die einen jeweiligen Strömungskanal 34, 36 ausbilden. Eine Trennwand 38 grenzt die Strömungskanäle 34,36 voneinander ab. Die beiden Wärmetauscher 30, 32 sind so angeordnet, dass sie parallel zueinander von Abgas durchströmt werden können.

In Strömungsrichtung des Abgases hinter dem Abgaskühler ist eine Klappe 40 vorgesehen, mittels welcher der Strömungskanal 34 des Wärmetauschers 30 verschlossen werden kann. Bei verschlossener Klappe 40 muss also die gesamte rückgeführte Abgasmenge den Wärmetauscher 32 durchströmen, bei geöffneter Klappe 40 strömt das rückgeführte Abgas parallel durch beide Wärmetauscher 30, 32 des Abgaskühlers 20.

Durch Öffnen der Klappe 40 wird also die gesamte zur Kühlung des Abgases zur Verfügung stehende Kühlernetzfläche vergrößert, die Kühlleistung des Abgaskühlers 20 erhöht und das rückgeführte Abgas somit stärker abgekühlt. Dies ist besonders in Betriebszuständen des Kraftwagens zweckmäßig, in denen besonders hohe Abgasmengen anfallen oder das Abgas eine besonders hohe Temperatur aufweist, beispielsweise im Volllastbetrieb der Brennkraftmaschine 14.

Fällt dagegen nur wenig bzw. relativ kühles Abgas an, so ist es sinnvoll, die Klappe 40 zu verschließen. Durch die verringerte zur Verfügung stehende Kühlernetzfläche wird das Abgas bei verschlossener Klappe 40 weniger stark gekühlt. Im Abgas enthaltener Wasserdampf, der bei zu starker Abkühlung des Abgases kondensieren würde, verbleibt daher in der Dampfphase. Dies ist besonders dann von Bedeutung, wenn das rückgeführte Abgas noch mittels eines Turboladers verdichtet wird. Wassertropfen könnten nämlich die Verdichterschaufeln eines solchen Turboladers beschädigen.

Die Steuerung der Klappe 40 kann anhand verschiedener Betriebsparameter der Brennkraftmaschine erfolgen. Beispielsweise ist es möglich, die Abgastemperatur und/oder den Abgasmassenstrom direkt zu messen und die Klappe 40 in Abhängigkeit von den Messergebnissen zu steuern. Die Steuerung der Klappe 40 kann ferner anhand der Leistungsabgabe der Brennkraftmaschine 14 erfolgen. Bei einer hohen Leistungsabgabe mit entsprechend hohen Abgastemperaturen wird die Klappe 40 geöffnet, bei niedriger Leistungsabgabe hingegen geschlossen.

Neben der Klappe 40 dient auch das Abgasrückführungsventil 24 zur Kontrolle der Abgasrückführung. Über das Abgasrückführungsventil 24 kann durch Veränderung des Staudrucks in der Abgasanlage 10 die Menge des rückgeführten Abgases eingestellt werden. Die Klappe 40 und das Abgasrückführungsventil ermöglichen es also, sowohl Menge als auch Temperatur des rückgeführten Abgases an den jeweiligen Betriebszustand der Brennkraftmaschine 14 und an die thermische Belastbarkeit der Komponenten der Abgasanlage 10 anzupassen.

## Patentansprüche

1. Kraftwagen mit einer Brennkraftmaschine (14) und einer Abgasanlage (10) mit einer Abgasleitung (12), mittels welcher Abgas von der Brennkraftmaschine (14) abführbar ist, sowie einer Abgasrückführungsleitung (16), mittels welcher Abgas aus der Abgasleitung (12) zu einem Ansaugtrakt (26) der Brennkraftmaschine (14) rückführbar ist, wobei in der Abgasrückführungsleitung (16) ein Abgaskühler (20) vorgesehen ist,
**dadurch gekennzeichnet, dass**
der Abgaskühler (20) gegenüber der Brennkraftmaschine (14) beweglich ist.

2. Kraftwagen nach Anspruch 1,
**dadurch gekennzeichnet, dass**
der Abgaskühler (20) mittels einer flexiblen Leitung (22) mit dem Ansaugtrakt (26) der Brennkraftmaschine (14) verbunden ist.

3. Kraftwagen nach Anspruch 2,
**dadurch gekennzeichnet, dass**
die flexible Leitung (22) aus einem nichtmetallischen Material besteht.

4. Kraftwagen nach einem der Ansprüche 1 bis 3,
**dadurch gekennzeichnet, dass**
in Strömungsrichtung des rückgeführten Abgases hinter dem Abgaskühler (20) ein Abgasrückführventil (24) zum Einstellen eines Gasmassenstroms des rückgeführten Abgases vorgesehen ist.

5. Kraftwagen nach einem der Ansprüche 1 bis 4,
**dadurch gekennzeichnet, dass**
der Abgaskühler (20) wenigstens zwei getrennte Wärmetauscher (30, 32) mit einem jeweiligen Strömungskanal (34, 36) aufweist, wobei die beiden Strömungskanäle (34, 36) in zumindest einem Betriebszustand des Abgaskühlers (20) parallel von rückgeführtem Abgas durchströmt werden.

6. Kraftwagen nach Anspruch 5,
**dadurch gekennzeichnet, dass**
wenigstens ein Verschlusselement (40) vorgesehen ist, mittels welchem ein zugeordneter Strömungskanal (34) verschließbar ist.

7. Verfahren zum Betreiben eines Kraftwagens mit einer Brennkraftmaschine (14) und einer Abgasanlage (10), bei welchem ein Abgasteilstrom aus einer Abgasleitung (12) der Abgasanlage (10) entnommen wird, mittels eines Abgaskühlers (20) gekühlt wird und über eine flexible Leitung (22) in einen Ansaugtrakt (26) der Brennkraftmaschine (14) zurückgeführt wird, wobei in Abhängigkeit vom Betriebszustand des Kraftwagens wenigstens ein Teilströmungsquerschnitt des Abgaskühlers (20) verschlossen wird.

8. Verfahren nach Anspruch 7,
**dadurch gekennzeichnet, dass**
der wenigstens eine Teilströmungsquerschnitt des Abgaskühlers (20) bei Unterschreiten eines vorgegebenen Abgasmassenstroms durch den Abgaskühler (20) verschlossen und bei Überschreiten eines vorgegebenen Abgasmassenstroms freigegeben wird.

9. Verfahren nach Anspruch 7 oder 8,
**dadurch gekennzeichnet, dass**
der wenigstens eine Teilströmungsquerschnitt des Abgaskühlers (20) bei Unterschreiten einer vorgegebenen Abgastemperatur verschlossen und bei Überschreiten einer vorgegebenen Abgastemperatur freigegeben wird.

10. Verfahren nach einem der Ansprüche 7 bis 9,
**dadurch gekennzeichnet, dass**
der wenigstens eine Teilströmungsquerschnitt des Abgaskühlers (20) bei Unterschreiten einer vorgegebenen Leistungsabgabe der Brennkraftmaschine (14) verschlossen und bei Überschreiten einer vorgegebenen Leistungsabgabe der Brennkraftmaschine (14) freigegeben wird.
